# NEW EUROPEAN PATENT SPECIFICATION

(11) **EP 0 321 117 B2**
(45) Date of publication and mention of the opposition decision: **13.07.2005**
(45) Mention of the grant of the patent: 22.12.1993
(21) Application number: 88311260.9
(22) Date of filing: 28.11.1988
(51) Int. Cl.: B29C 45/17

(54) **Method and system for localized fluid-assisted injection molding and body formed thereby**
Verfahren und System zum von lokalem Fluidium assistierten Spritzgiessen und dadurch hergstellter Körper
Procédé et système pour le moulage par injection assisté localement par un fluide et corps ainsi fabriqué

(30) Priority: 16.12.1987 US 133900
(43) Date of publication of application: 21.06.1989
(73) Proprietor: Melea Limited, Gibraltar (GI)
(72) Inventor: Loren, Norman S., Warren Michigan 48091 (US)
(74) Representative: Rehders, Jochen

(56) References cited:
- EP-A- 0 127 961
- EP-A- 0 283 207
- EP-A- 0 309 257
- DE-A- 1 194 127
- DE-A- 2 159 344
- DE-C- 2 445 786
- GB-A- 2 100 661
- GB-A- 2 122 130
- GB-A- 2 139 548
- GB-A- 8 722 620
- JP-A- 5 074 660
- US-A- 3 044 118
- US-A- 4 101 617
- US-A- 4 136 220
- US-A- 4 140 672
- US-A- 4 234 642
- US-A- 4 255 368
- US-A- 5 069 859
- Plastics Engineering Handbook of the Society of the Plastics Industry Inc., third Edition, 1960, page 385
- Plastics Engineering Handbook of the Society of the Plastics Industry, Inc. fourth Edition, 1976, page 117
- Das Mehrkomponenten-Spritzgiessverfahren als Wettbewerb oder Ergänzung zum Kompaktspritzgiessen, Dipl. Ing. H. Eckardt, Battenfeld publication, October 1987

## Description

### TECHNICAL FIELD

This invention relates to a method and apparatus for gas assisted injection molding and body formed thereby and, in particular, to method and system for localized gas assisted injection molding and body formed by the method and system.

### BACKGROUND ART

It is well known in the plastic molding art to use pressurized gas in conjunction with the injection molding of articles. The pressurized gas is typically nitrogen gas which is introduced into the molten plastic.

Pressurized gas serves may purposes. First, it allows the article so formed to have hollow interior portions which result in weight and material savings. Secondly, it minimizes the molded in stresses by eliminating high second stage injection pressure. This also reduces part weight in that the gas is used to fill out the part. Thirdly, the pressurized gas applies outward pressure to force the plastic against the surfaces of the mold cavity while the article is setting up. This enhances surface quality by eliminating sink marks, especially in areas of the article having thicker plastic sections, such as structural ribs or bosses.

One problem associated with gas-assisted injection molding is that some parts are of such a size and shape so as to reduce the benefits normally obtained from the use of gas-assisted injection molding. For example, for some items it is near impossible for the gas introduced at the injection aperture to move to the farthest reaches of the mold cavity. Very complex channel configurations throughout the part would be required to put the gas in a local area where it is needed and to the farthest reaches of the mold.

UK Patent Application No. 2,139,548 discloses an injection molding process wherein pressurized gas is injected into a stream of plastic material at one or more selected positions in the mold space.

US Patent No. 4,474,717 discloses a localized gas-assisted injection molding method and system including a probe having a head with one or more gas orifices. In one embodiment, the probe is retractable.

West German Patent Document 2,106,546 discloses a method and apparatus for forming plastic shoe heels with compressed gas blown into the center of the plastic mass. The resulting hollow cavity is then filled with a synthetic foam.

US-A-3044118 describes a molding method in which a a thermoplastic material is molded in a mold cavity having a communicating reservoir. After filling the mold cavity with molten thermoplastic material and partially filling the reservoir with thermoplastic material, gas pressure is applied directly to the surface of the melt in the reservoir, whereby the melt flows back into the mold cavity to compensate for the volume change attending the solidification and cooling of the thermoplastic material.

Part requirements and tooling considerations (i.e. thin steel sections), however, may prevent the introduction of gas directly into the part.

### DISCLOSURE OF THE INVENTION

According to one aspect of the present invention there is provided a method for making a hollow-shaped body from a plastic resin in a gas-assisted injection molding system including a mold having an injection aperture and a body forming cavity, the method comprising: injecting an amount of molten resin sufficient for the preparation of the body from an injection nozzle through the injection aperture, along a resin flow path and into the cavity in the mold, injecting gas into the molten resin through at least one aperture to distribute the resin at least partially over interior surfaces defining the cavity whereby the body is formed within the cavity; cooling the body so formed to a temperature beneath the softening point of the resin; relieving the pressure within the body; and opening the mold to remove the body, characterised by: causing a portion of the molten resin to flow from the cavity into a resin overflow reservoir in the mold during injection of the resin into the cavity so that the resin at least partially fills the resin overflow reservoir; said method including the step of introducing pressurized gas into the molten resin through the at least one aperture in the reservoir communicating the gas aperture in the mold cavity.

The invention also includes an injection molding apparatus for making a hollow-shaped body from a plastic resin, the apparatus including a mold, a source of pressurised gas and an injection molding machine having a nozzle for injecting an amount of molten resin sufficient for the preparation of the body into the mold through a resin injection aperture along a resin flow path and into a cavity in the mold, gas injection means for locally injecting gas into the molten resin through at least one gas aperture to distribute the resin at least partially over the interior surfaces defining the cavity, characterized by the mold having a resin overflow reservoir in communication with the cavity to receive the plastic resin from the cavity which flows from the cavity during the injection of resin into the cavity, said gas aperture within the resin overflow reservoir being located remote from the injection aperture and wherein the resin overflow reservoir communicates the gas aperture and the mold cavity.

One hollow body formed by the method and apparatus has a substantially endless hollow body portion formed within the body by the gas.

In one embodiment, the mold has a spillover reservoir in communication with the cavity. Excess resin at least partially fills the spillover reservoir during distribution of the resin over the interior surfaces.

In another embodiment the gas aperture is formed by a pin and the pressure is relieved through the pin.

The objects, features and advantages of the present invention are readily apparent from the following detailed description of the best mode for carrying out the invention when taken in connection with the following drawings.

### BRIEF DESCRIPTION OF THE DRAWINGS

FIGURE 1 is a schematic view, partially broken away and in cross-section, of a conventional fluid assisted injection molding apparatus including a mold in its open position, a source of gas and its associated control valve and an injection molding machine having a nozzle;
FIGURE 2 is a block diagram illustrating the various steps of the method of the present invention;
FIGURE 3 is a schematic view, partially broken away and in cross-section, which illustrates the method and apparatus of the present invention wherein local fluid injection is provided by creating an overflow reservoir outside of the cavity of the mold;
FIGURE 4 is a view, partially broken away and in cross-section, of a portion of the body formed by the method and system of FIGURE 3 taken along lines 4-4;
FIGURE 5 is a side cross-sectional view of a stack of plastic garbage cans constructed in accordance with the present invention;
FIGURE 6 is an enlarged view, partially broken away and in cross-section, of an annular lip portion of one of the garbage cans;
FIGURE 7 is a top view illustrating a first endless hollow body portion without showing a reservoir;
FIGURE 8 is a view, partially broken away and in cross-section, taken along lines 8-8 in FIGURE 7 during the forming process of the first body portion;
FIGURE 9 is a top view illustrating a second endless hollow body portion without showing a reservoir;
FIGURE 10 is a view, partially broken away and in cross-section, taken along lines 10-10 in FIGURE 9 during the forming process of the second body portion;
FIGURE 11 is a top view of the first body portion and an associated spillover reservoir;
FIGURE 12 is a view illustrating the invention and a multi-gate system; and
FIGURE 13 is a view of the invention and a hot runner system.

### BEST MODE FOR CARRYING OUT THE INVENTION

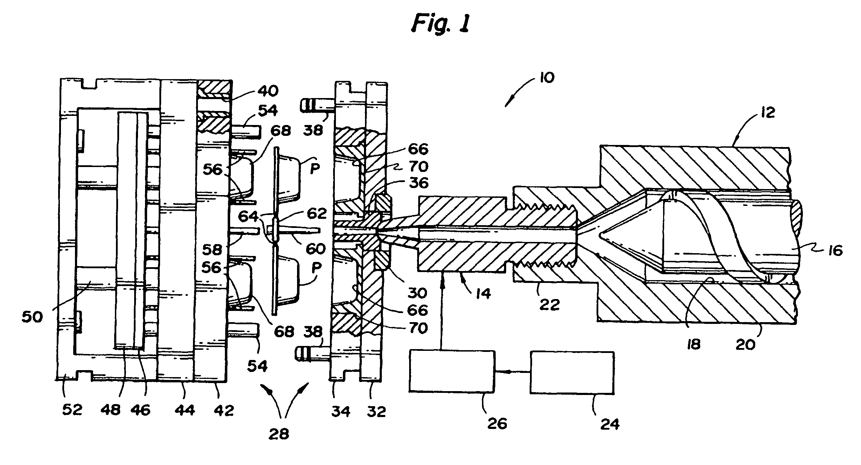

Referring now to FIGURE 1, there is illustrated a conventional gas-assisted injection molding apparatus, generally indicated at 10, for making a plastic body from plastic resin. A general understanding of the different components of the apparatus 10 is useful in understanding the method and apparatus of the present invention.

Briefly, the injection molding apparatus 10 includes an injection molding machine, generally dicated at 12, having a nozzle, generally indicated at 14, for injecting predetermined amounts or shots of molten resin. The injection molding machine 12 includes a hydraulic screw ram 16 which is disposed in a bore 18 formed in a barrel 20 of the injection molding machine 12. The ram 16 plasticizes and advances resin towards the nozzle 14. Upon complete plasticization of the resin, the screw ram 16 is hydraulically advanced towards the end portion 22 of the barrel 20 to inject molten plastic through the nozzle 14 as is well known in the art.

The apparatus 10 also includes a pressurized gas supply 24 which supplies pressurized gas, (i.e. typically nitrogen gas), to the nozzle 14 through a gas control valve 26. The valve 26 controls the flow of pressurized gas from the gas supply 24 in synchronization with the injection of molten plastic from the nozzle 14 as is also well known in the art.

The apparatus 10 further includes a mold or a mold body, generally indicated at 28. As illustrated in FIGURE 1, the mold 28 comprises a two-plate mold body. One of the plates includes a locating ring 30 for locating the injection end of the nozzle 14. The locating ring 30 is mounted on a clamp plate 32 which, in turn, is fixedly connected to a cavity retainer plate or cavity plate 34. A sprue bushing 36 is disposed within the locating ring 30 and is supported by the clamp plate 32.

Leader pins 38 on the cavity plate 34 provide the male half of the male/female connection of the first plate with the second plate of the two-plate mold 28. In particular, the second plate includes leader pin bushings 40 (only one of which is shown) which slidably receive and retain the leader pins 38 therein in the closed position of the mold 28. The leader pin bushings 40 are retained within a core retainer plate 42. The core retainer plate 42 is fixedly connected to a support plate 44 which, in turn, is connected to an ejector retainer plate 46. The ejector retainer plate 46 is connected to an ejector plate 48 which, in turn, is supported by support pillars 50. The support plate 44 is also fixedly connected to the ends of a U-shaped ejector housing 52 in which the support pillars 50 are also connected.

The plate 46 supports a plurality of return pins 54, ejector pins 56 and a sprue puller pin 58 which extend toward the plate 34 and through the plates 42 and 44. The ejector pins 56 are provided for ejecting parts P formed within the mold 28. The sprue puller pin 58 is aligned with the sprue bushing 36.

As illustrated in FIGURE 1, the parts P are interconnected by a sprue 60, a runner 62 and gates 64 which define a resin flow path from the sprue bushing 36 to cavities 66. Opposing surfaces of male and female mold parts 68 and 70, respectively, define the cavities 66. The mold parts 68 are supported on the plate 46 and the mold parts 70 are supported on the cavity retainer plate 34.

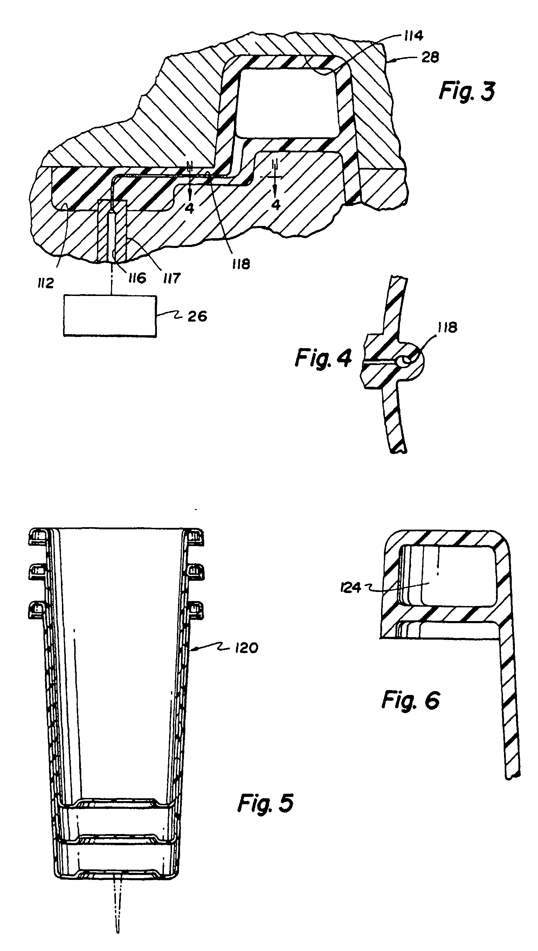

Referring now to FIGURE 3, there is illustrated an embodiment of the present invention. In particular, the mold 28 includes an overflow reservoir 112 outside of a mold cavity 114 of the mold 28. Gas is introduced into the reservoir 112 through a passageway 116 formed by an insert 117. Gas flows from the valve 26, through the passageway 116 and through a gas aperture 118 which, in turn, extends through the resin reservoir 112 and into the part proper. Preferably, the flow of resin fills the resin reservoir 112 before the resin requirement for the mold part is complete so that the gas accomplishes the final mold cavity filling without breakthrough. Such construction allows for better tool construction with less maintenance.

Obviously, there are numerous choices of gas entry and exit devices possible for controlled gas entry and gas exit with respect to the part.

In the example of FIGURES 3 through 6 a garbage can 120 is formed and may be stacked, as illustrated in FIGURE 5. This is true even though it is highly desirable to have a stronger rim 122 that will stay round to accept a corresponding lip. The size and shape of the garbage can 120 typically precludes the use of gas distribution from the sprue of the mold 28. For example, stacking considerations precludes the use of gas channels from the sprue. Also, the thin lip section 124 of the garbage can's rim 122 may prevent the introduction of gas directly into the rim 122 because of tooling considerations (i.e. thin steel sections) and part requirements.

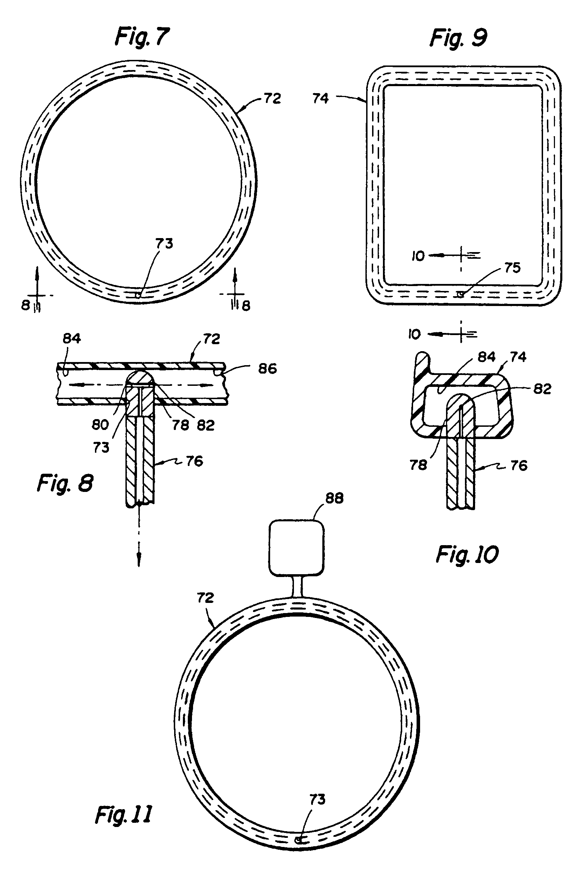

FIGURES 7 and 9 illustrate first and second hollow endless bodies, generally indicated at 72 and 74, respectively, formed by gas injection through gas apertures 73 and 75, respectively. The method and apparatus include a pin generally indicated at 76, which forms the gas apertures 73 and 75 and which extends into the bodies 72 and 74. Also, one or more pins 76 may be utilized with or without the gas assistance from the nozzle in some applications.

A tip portion 78 of the pin 76 divides each of the gas apertures into a pair of orifices 80 and 82 which extend in substantially opposite directions to distribute the resin in opposite directions to form first and second compartments 84 and 86 in each of the hollow-shaped bodies 72 and 74. The orifices 80 and 82 prevent the gas from taking one direction and also the gas and the resin do not have to travel very far. Alternatively, each of the gas apertures terminates at a single orifice.

The tip portion 78 may be either relatively conductive or relatively non-conductive.

Gas entry into the bodies 71 and 74 from the pin 76 is preferably parallel to the resin flow path. The pressure of the gas may be at a higher pressure, lower pressure or a pressure equal to the pressure of the resin in the mold.

The gas may be vented through the pin 76 or may be vented at another location separate from the pin 76 to remove pressure from the part. Gas exit from the mold is preferably through the pin 76, but may be elsewhere in the mold or by pin retraction.

The apparatus may allow spillover into a spillover reservoir 88, as indicated in FIGURE 11, positioned substantially opposite the gas aperture 73. The spillover reservoir 88 facilitates the creation of the endless hollow bodies 72 and 74 which are as close to endless as possible due to minor variations in process parameters.

The gate between resin overflow reservoir 112 and the part proper is removed after the molding process is complete. Likewise, the gate between the spillover reservoir 88 and the body 72 is also removed. Any resulting hole caused by the flow of gas to and from the part can be closed in any number of ways in order to prevent contamination within the part during a subsequent plastic processing step.

Also, with two gas apertures into the mold cavity (i.e. spaced 180 degrees apart) a bulkhead may be formed within the hollow body to define two separate compartments. The bulkhead would be formed approximately 90 degrees from each of the gas apertures.

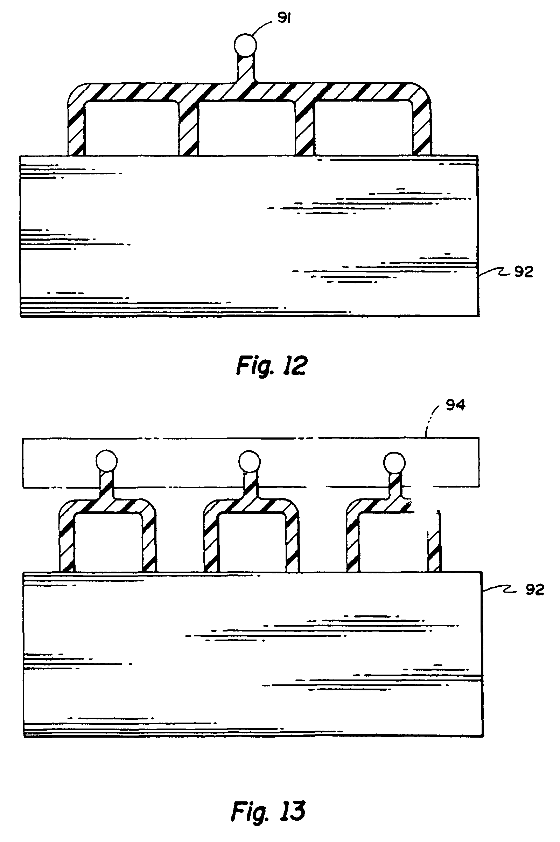

The apparatus of FIGURE 3, may be utilized with a regular sprue with a nozzle in a system having multiple resin flow apertures from a single sprue 91 into a part 92, as illustrated in FIGURE 12, or a hot runner manifold 94 with a nozzle as illustrated in FIGURE 13.

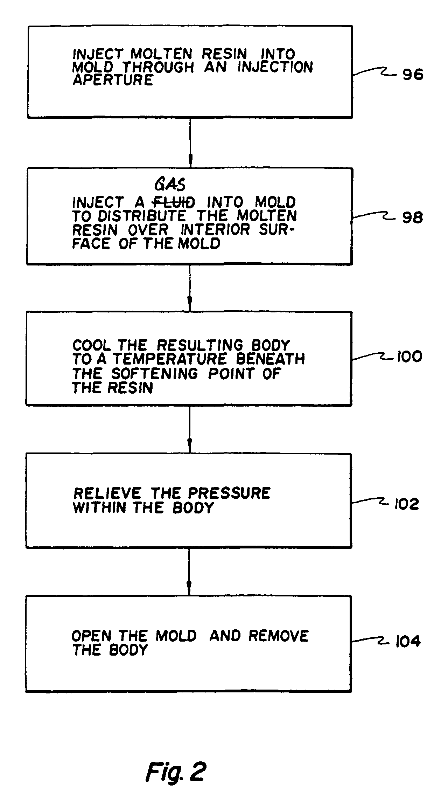

Referring now to FIGURE 2 in combination with FIGURE 3, there is illustrated, in flowchart form, process steps of the method of the present invention.

In step 96, plastic resin is injected into the mold 28 through an injection aperture formed in the sprue bushing 36.

In step 98, gas is injected into the mold 28 through the gas aperture 118 under control of the valve 26.

In step 100, the gas supports the plastic article or part in the mold cavity 66 against the interior surfaces thereof until the article cools.

In step 102, the gas is vented through an opening formed in the part and back through the gas passageway 116 and the aperture 118 under control of the valve 26. Obviously, numerous methods and devices are available to perform the pressure relieving step in a suitable manner.

In step 104, the mold 28 is opened to remove the part from the mold 28.

The method and apparatus of the present invention provides numerous advantages. For example, when the pin 76 of FIGURES 8 and 10 includes a conductive tip portion 78, the molten resin heats the tip portion 78 to thereby prevent premature skin formation at the fluid aperture. Also, when a reciprocating pin is utilized, the tip portion breaks through any skin formation in the mold if the tip portion is non-conductive. If the tip portion is conductive the molten resin will seal the hole formed by the tip portion when the tip portion is retracted. Alternatively, if the gas aperture is coaxial with the pin, pin retraction may cause a small vent hole to be formed in the part.

The method and apparatus maintains pressure at a localized area of the mold to prevent formation of a sink mark during resin solidification. The method and apparatus can be used to create hollow bodies throughout a part not attainable with a single gas orifice through the injection aperture. Furthermore, use of multiple resin reservoirs allows for part sectionalization of hollow bodies.

## Claims

1. A method for making a hollow-shaped body from a plastic resin in a gas-assisted injection molding system including a mold having an injection aperture and a body forming cavity, the method comprising: injecting an amount of molten resin sufficient for the preparation of the body from an injection nozzle through the injection aperture, along a resin flow path and into the cavity in the mold; injecting gas into the molten resin through at least one aperture to distribute the resin at least partially over interior surfaces defining the cavity, whereby the body is formed within the cavity; cooling the body so formed to a temperature beneath the softening point of the resin; relieving the pressure within the body; and opening the mold to remove the body, **characterized by:**
causing a portion of the molten resin to flow from the cavity into a resin overflow reservoir in the mold during injection of the resin into the cavity so that the resin at least partially fills the resin overflow reservoir; said method including the step of introducing the pressurized gas into the molten resin through the at least one aperture in the resin overflow reservoir communicating the gas aperture and the mould cavity.

2. A method according to claim 1 **characterized by:**
injecting an amount of molten resin necessary for the preparation of the hollow shaped body comprising a substantially endless hollow body portion formed within the body by the gas;
causing a portion of the molten resin to flow from the cavity into a resin spillover reservoir in the mold during injection of the pressurized gas into the cavity so that the resin at least partially fills the resin spillover reservoir; said method including the step of introducing pressurized gas into the cavity at a point substantially opposite the spillover reservoir communicating the cavity where the substantially endless hollow body portion is formed within the body by the gas.

3. An injection molding apparatus (10) for making a hollow-shaped body (120, 124) from a plastic resin, the apparatus (10) including a mold (28; 68, 70), a source of pressurized gas (24) and an injection molding machine (12) having a nozzle (14) for injecting an amount of molten resin sufficient for the preparation of the body into the mold through a resin injection aperture along a resin flow path (60, 62, 64) and into a cavity (66; 114) in the mold (28; 68, 70), gas injection means (117) for locally injecting gas into the molten resin through at least one gas aperture (118) to distribute the resin at least partially over the interior surfaces defining the cavity (66; 114) **characterized by** the mold (28; 68, 70) having a resin overflow reservoir (112) in the mold (28; 68, 70) in communication with the cavity (66; 114) to receive the plastic resin from the cavity (66; 114) which flows from the cavity during the injection of resin into the cavity (66; 114), said gas aperture (118), within the resin overflow reservoir (112) being located remote from the injection aperture and wherein the resin overflow reservoir (112) communicates the gas aperture (118) and the mold cavity (66; 114).

4. An injection molding apparatus (10) according to claim 3 **characterized by** the mold (28; 68, 70) having a cavity (66) defining a substantially endless body portion (72) formed within the body and having a resin spillover reservoir (88) outside the body in the mold (28; 68, 70) in communication with the portion of the cavity (66) defining the substantially endless body portion (72) to receive the plastic resin which flows from the cavity (66) during the injection of pressurized gas into the cavity (66), wherein the aperture (73) for injection of pressurized gas is located at a point remote from the spillover reservoir (88) at a point substantially opposite the spillover reservoir (88) to create a substantially endless hollow body portion (72) within the body by the gas.

5. Apparatus according to claim 3 or 4, wherein the mold (28; 68, 70) has more than one resin injection aperture.

6. Apparatus according to any one of claims 3 to 5 wherein the mold has more than one resin reservoir (88, 112).

7. Apparatus according to any one of claims 3, 5 or 6 including more than one gas aperture (73, 75, 118).

8. Apparatus according to any one of claims 3 to 7 wherein the gas injecting means includes a valve mechanism (26) for controlling the flow of pressurized gas into the mold (28; 68, 70

9. Apparatus according to any one of claims 3 to 8 which includes a multi-nozzle, hot runner, manifold system (94) for injecting resin into the mold (28; 68, 70).

10. Apparatus according to any one of claims 3 to 8, which includes a multi-gate runner system (91) for injecting resin into the mold (28; 68, 70).

11. Apparatus according to any one of claims 3 to 10 wherein the mold (28; 68, 70) includes a pin (76, 117) for at least partially forming the fluid aperture (73, 75, 118).

12. Apparatus according to claim 11 wherein the pin (76) has a thermally conductive tip portion (78).

## Patentansprüche

1. Verfahren zum Herstellen eines hohlgeformten Körpers aus Kunststoffharz mittels einer gasunterstützten Spitzgießeinrichtung mit einer Form, die eine Einspritzöfffnung und einen Hohlraum zum Formen des Körpers aufweist, mit den folgenden Schritten
Einspritzen einer geschmolzenen Harzmenge, die zur Herstellung des Körpers ausreicht, ausgehend von einer Einspritzdüse durch die Einspritzöffnung, entlang einem Harzfließweg und in den Hohlraum in der Form;
Einbringen eines Gases in die Harzschmelze durch wenigstens eine Öffnung, um das Harz wenigstens teilweise über Innenflächen, die den Hohlraum bilden, zu verteilen, wodurch der Körper innerhalb des Hohlraums geformt wird;
Abkühlen des so geformten Körpers auf eine Temperatur unterhalb des Erweichungspunktes des Harzes;
Entlasten des Drucks innerhalb des Körpers; und
Öffnen der Form, um den Körper zu entformen,
**dadurch gekennzeichnet, dass** eine Teilmenge der Harzschmelze während des Einspritzens des Harzes in den Hohlraum veranlasst wird, von dem Hohlraum in einen Harzvorratsbehälter zu fließen, so dass das Harz den Harzvorratsbehälter wenigstens teilweise füllt, wobei das Verfahren den Schritt des Einbringens des unter Druck gesetzten Gases in die Harzschmelze durch die wenigstens eine Öffnung im Harzvorratsbehälter, der mit der Gasöffnung und dem Hohlraum in der Form in Verbindung steht, umfasst.

2. Verfahren nach Anspruch 1 **gekennzeichnet durch:**
Einspritzen einer geschmolzenen Harzmenge, die notwendig ist, um einen hohlgeformten Körper, der einen im Wesentlichen endlosen, hohlen, **durch** das Gas im Körper geformten Körperbereich umfasst, herzustellen;
einen Teil der Harzschmelze Veranlassen, vom Hohlraum in einen Harzüberlaufbehälter in der Form während des Einbringens des unter Druck gesetzten Gases in den Hohlraum zu fließen, so dass das Harz den Harzüberlaufbehälter wenigstens teilweise füllt, wobei das Verfahren den Schritt umfasst, das unter Druck gesetzte Gas an einem zu dem mit dem Hohlraum in Verbindung stehenden Harzüberlaufbehälter im Wesentlichen entgegengesetzt angeordneten Punkt in den Hohlraum einzuführen, wo der im Wesentlichen endlose, hohle Körperbereich **durch** das Gas im Körper geformt wird.

3. Spritzgießvorrichtung (10) zum Herstellen eines hohlgeformten Körpers (120, 124) aus Kunststoffharz mit einer Form (26; 68, 7), einer Quelle (24) für unter Druck gesetztes Gas und einer Spritzgießmaschine (12) mit einer Spritzdüse (14) zum Einspritzen einer geschmolzenen Harzmenge, die zum Herstellen des Körpers ausreicht, in die Form durch eine Harzeinspritzöffnung entlang einem Harzfließweg (60, 62, 64) und in einen Hohlraum (66; 114), in der Form (28; 68, 70), Gaseinführmitteln (117), um örtlich Gas in die Harzschmelze durch wenigstens eine Gasöffnung (118) einzubringen, um das Harz wenigstens teilweise uber die Innenflächen, die den Hohlraum (66; 114) begrenzen, zu verteilen, **dadurch gekennzeichnet, dass** die Form (28; 68; 70) einen Harzvorratsbehälter (112) in der Form (28; 68, 70) aufweist, der mit dem Hohlraum (66; 114) in Verbindung steht, um das Kunstharz, das von dem Hohlraum (66; 114) während des Einspritzens von Harz in den Hohlraum (66; 114) fließt, aufzunehmen, wobei die Gasöffnung (118) in dem Harzvorratsbehälter (112) von der Einspritzöffnung beabstandet angeordnet ist und der Harzvorratbehalter (112) mit der Gasöffnung (118) und dem Hohlraum (66; 114) in der Form in (28; 68, 70) Verbindung steht.

4. Spritzgießvorrichtung (10) nach Anspruch 3, **dadurch gekennzeichnet, dass** die Form (28; 68, 70) einen einen im Wesentlichen endlosen, im Körper geformten Körperbereich (72) festlegenden Hohlraum (66) und einen Harzüberlaufbehälter (88) außerhalb des Körpers in der Form (28; 68, 70), der mit dem Bereich des Hohlraums (66) in Verbindung steht, der den im Wesentlichen endlosen Körperbereich (72) festlegt, aufweist und der das Kunststoffharz aufnimmt, das aus dem Hohlraum (6) während des Einbringens des unter Druck gesetzten Gases in den Hohlraum (66) fließt, wobei sich die Öffnung (73) zum Einbringen des unter Druck gesetzten Gases an einem vom Überlaufbehälter (88) entfernten und zum Überlaufbehälter (88) im Wesentlichen entgegengesetzt angeordneten Punkt befindet, um einen im Wesentlichen endlosen, hohlen Körperbereich (72) innerhalb des Körpers durch das Gas auszubilden.

5. Vorrichtung nach Anspruch 3 oder 4, bei der die Form (28; 68; 70) mehr als eine Harzeinspritzöffnung aufweist.

6. Vorrichtung nach einem der Ansprüche 3 bis 5, bei der die Form mehr als einen Harzvorratsbehälter (88, 112) aufweist.

7. Vorrichtung nach einem der Ansprüche 3 bis 6, mit mehr als einer Gasöffnung (73, 75, 118).

8. Vorrichtung nach einem der Ansprüche 3 bis 7, bei der die Gaseinführmittel einen Ventilmechanismus (26) zum Steuern des Gasflusses in die Form (28; 68, 70) aufweisen.

9. Vorrichtung nach einem der Ansprüche 3 bis 8, mit einem Mehrfachdüsen-Heißkanal-Verteilersystem (94) zum Einspritzen von Harz in die Form (28; 68, 70).

10. Vorrichtung nach einem der Ansprüche 3 bis 8, mit einem Angusskanalsystem (91) mit Mehrfachangussanschnitten zum Einspritzen von Harz in die Form (28; 68, 70).

11. Vorrichtung nach einem der Ansprüche 3 bis 11, bei der die Form (28; 68, 70) einen Dorn (76, 117) zum mindestens teilweisen Bilden der Gasöffnung (73, 75, 118) aufweist.

12. Vorrichtung nach Anspruch 11, bei der der Dorn (76) eine wärmeleitende Spitze (78) aufweist.

## Revendications

1. Procédé de fabrication d'un corps creux à partir d'une résine plastique dans un système de moulage par injection assisté par gaz comportant un moule muni d'une ouverture d'injection et d'un cavité pour former le corps, le procédé consistant à injecter une quantité de résine fondue suffisante pour la préparation du corps à partir d'une buse d'injection au travers de l'ouverture d'injection, le long d'une trajectoire d'écoulement de résine et dans la cavité du moule ; à introduire du gaz dans la résine fondue au travers d'au moins une ouverture pour distribuer la résine au moins partiellement sur des surfaces intérieures délimitant la cavité de façon à former le corps à l'intérieur de la cavité ; à refroidir le corps ainsi formé jusqu'à une température en dessous du point de ramollissement de la résine ; à relâcher la pression à l'intérieur du corps et à ouvrir le moule pour enlever le corps, **caractérisé par le fait que** :
l'on amène une portion de la résine fondue à s'écouler à partir de la cavité dans un réservoir à résine dans le moule pendant l'injection de la résine dans la cavité de façon que la résine remplisse, au moins partiellement, le réservoir, à résine , résine ; ledit procédé comportant l'étape qui consiste à introduire du gaz sous pression dans la résine fondue au travers de l'au moins une ouverture dans le réservoir à résine communicant avec l'ouverture pour le gaz et avec la cavité du moule.

2. Procédé selon la revendication 1, **caractérisé en ce que** :
l'on injecte une quantité de résine fondue nécessaire pour la préparation du corps creux comportant une portion de corps creux sensiblement sans fin, formée dans le corps par le gaz ;
l'on amène une portion de la résine fondue à s'écouler à partir de la cavité dans un réservoir de décharge de résine dans le moule pendant l'introduction du gaz sous pression dans la cavité de façon que la résine remplisse, au moins partiellement le réservoir de décharge de résine ;
ledit procédé comprenant l'étape qui consiste à introduire du gaz sous pression dans la cavité à un point opposé au réservoir de décharge communicant avec la cavité dans laquelle la portion de corps creux sensiblement sans fin est formée dans le corps par le gaz.

3. Dispositif de moulage par injection (10) pour fabriquer un corps creux à partir d'une résine plastique, le dispositif (10) comprenant un moule (28 ; 68, 70), une source de gaz sous pression (24) et une machine de moulage par injection (12) ayant une buse (14) pour injecter une quantité de résine fondue suffisante pour la préparation du corps dans le moule, au travers d'une ouverture d'injection de résine le long d'une trajectoire d'écoulement de résine (60, 62, 64) et dans une cavité (66 ; 114) dans le moule (28 ; 68, 70), des moyens d'introduction gaz (117) pour introduire localement du gaz dans la résine fondue au travers d'au moins une ouverture de gaz (118), pour distribuer la résine au moins partiellement sur les surfaces intérieures délimitant la cavité, **caractérisé par le fait que** le moule (28 ; 68, 70) comporte un réservoir de résine (112) dans le moule (28 ; 68, 70) en communication avec la cavité (66 ; 114) pour recevoir la résine plastique de la cavité (66 ; 114) qui s'écoule à partir de la cavité pendant l'injection de la résine dans la cavité (66 ; 114), ladite ouverture de gaz (118) dans le réservoir de résine (112) étant localisée à distance de l'ouverture d'injection, et le réservoir de résine (112) communicant avec l'ouverture de gaz (118) et la cavité (66 ; 114) dans le moule (28 ; 68, 70).

4. Dispositif de moulage par injection (10) selon la revendication 3, **caractérisé en ce que** le moule (28 ; 68, 70) comporte une cavité (66) délimitant une portion de corps sensiblement sans fin (72), formée dans le corps et comporte un réservoir de décharge de résine en dehors du corps dans le moule (28 ; 68, 70) en communication avec la portion de moule (66) délimitant la portion de corps sensiblement sans fin (72), pour recevoir la résine plastique, qui s'écoule de la cavité (66) pendant l'introduction du gaz sous pression dans la cavité (66) et dans lequel l'ouverture (73) d'introduction de gaz sous pression est localisée à distance du réservoir de décharge de résine (88) à un point sensiblement opposé au réservoir de décharge (88) de façon à former une portion de corps creux sensiblement sans fin (72) dans le corps par le gaz.

5. Dispositif selon la revendication 3 ou 4 dans lequel le moule (28 ; 68, 70) possède plus d'une ouverture pour l'injection de la résine.

6. Dispositif selon l'une quelconque des revendication 3 à 5 dans lequel le moule possède plus d'un réservoir pour la résine (88, 112).

7. Dispositif selon l'une quelconque des revendications 3 à 6 comportant plus d'une ouverture de gaz (73, 75, 118).

8. Dispositif selon l'une quelconque des revendications 3 à 7 dans lequel le moyens d'introduction du gaz comportent un mécanisme à vanne (26) pour commander l'écoulement de gaz sous pression dans le moule (28 ; 68, 70).

9. Dispositif selon l'une quelconque des revendications 3 à 8 qui comprend un système distributeur multi-buses à conduite chaude pour injecter de la résine dans le moule (28 , 68, 70).

10. Dispositif selon l'une quelconque des revendications 3 à 8 qui comporte un système de conduite multi-grilles (91) pour injecter de la résine dans le moule (28 ; 68, 70).

11. Dispositif selon l'une quelconque des revendications 3 à 10 dans lequel le moule (28 ; 68, 70) comporte une broche (76, 117) pour former, au moins partiellement, l'ouverture de gaz (73, 75, 118).

12. Dispositif selon l'une quelconque des revendications 3 à 11 dans lequel la bronche (76) comporte une portion d'extrémité (78) thermiquement conductrice.
